# DEMANDE DE BREVET EUROPEEN

(11) **EP 2 548 479 A1**
(43) Date de publication de la demande: **23.01.2013**
(21) Numéro de dépôt: 11305940.6
(22) Date de dépôt: 19.07.2011
(51) Int. Cl.: A47J 19/00, A47J 36/04

(54) **Dispositif pour presser des produits alimentaires, notamment des légumes**

(71) Demandeur: Birambeau, 75012 Paris (FR)
(72) Inventeur: Borel, Christian, 75012 Paris (FR)
(74) Mandataire: Bonnet, Michel

(57) **Abrégé**

Ce dispositif (10) pour presser des produits alimentaires, notamment des légumes, comporte :
- une cuve (12) destinée à recevoir lesdits produits alimentaires,
- un fond (14) de cuve perforé, et
- une pale (20) de pression des produits alimentaires contre le fond perforé (14).

Le fond perforé (14) est plus précisément formé par moulage d'une matière plastique rigide.

## Description

La présente invention concerne un dispositif pour presser des produits alimentaires, notamment des légumes.

Elle s'applique plus particulièrement à un dispositif comportant:
- une cuve destinée à recevoir lesdits produits alimentaires,
- un fond de cuve perforé, et
- une pale de pression des produits alimentaires contre le fond perforé.

Un tel dispositif est bien connu notamment pour presser des pommes de terre en purée ou pour broyer des légumes en potage : il est alors généralement appelé moulin à légumes. Un exemple de moulin à légumes est décrit dans la demande de brevet européen publiée sous le numéro EP 0 721 757 ou dans la demande de brevet français publiée sous le numéro FR 2 391 684.

Dans ces documents, le fond de cuve perforé est conçu dans un matériau dur et réputé apte à broyer des légumes tel que l'acier inoxydable. De même la pale de pression et parfois aussi la cuve elle-même sont généralement en acier inoxydable. Cela en fait des dispositifs relativement coûteux.

Il peut cependant être souhaité de prévoir un dispositif pour presser des produits alimentaires qui soit moins coûteux.

L'invention a donc pour objet un dispositif pour presser des produits alimentaires, notamment des légumes, comportant une cuve destinée à recevoir lesdits produits alimentaires, un fond de cuve perforé et une pale de pression des produits alimentaires contre le fond perforé, caractérisé en ce que le fond perforé est formé par moulage d'une matière plastique rigide.

Il a en effet été constaté que, de façon surprenante, un matériau en plastique rigide pouvait remplir avec la même efficacité que de l'acier inoxydable la fonction de broyage des produits alimentaires. Ainsi, en formant le fond de cuve par moulage dans une telle matière plastique dure, il devient possible de concevoir un moulin à légumes moins coûteux mais tout aussi performant que n'importe quel autre moulin à légumes de l'état de la technique.

De façon optionnelle, la cuve est également formée par moulage d'une matière plastique rigide et moulée avec le fond perforé.

Dans ce cas, les coûts de fabrication sont encore moins élevés, la cuve et le fond perforé ne faisant qu'une seule pièce. En outre, la cuve et le fond peuvent alors être moulés dans une unique et même matière plastique.

De façon optionnelle également, la pale est également formée par moulage d'une matière plastique rigide. Il a en effet été également constaté que la dureté d'un matériau plastique pouvait suffire pour que la pale remplisse correctement sa fonction d'écrasement des produits alimentaires.

De façon optionnelle également, la matière plastique rigide comporte au moins l'un des éléments de l'ensemble constitué de polyoxyméthylène, acrylonitrile butadiène styrène, polycarbonate, styrène acrylonitrile et polypropylène.

De façon optionnelle également, un dispositif pour presser des produits alimentaires selon l'invention peut en outre comporter un arbre d'entraînement de la pale en rotation et un couvercle à fixation amovible sur la cuve couvrant une ouverture principale de la cuve opposée au fond perforé, le fond perforé comportant en son centre un trou destiné à recevoir une première extrémité de l'arbre et la face interne du couvercle comportant en son centre un logement destiné à recevoir une seconde extrémité de l'arbre.

Ainsi, le couvercle peut remplir une double fonction : celle de maintenir les produits alimentaires à l'intérieur de la cuve et celle de maintenir la pale dans une position correcte prédéfinie pour les broyer en exerçant une pression sur son arbre d'entraînement lorsqu'il est fixé.

Il permet alors de se passer d'un bras radial rigide positionné en force à l'intérieur de la cuve et d'un ressort maintenant ce bras radial en position, ces deux éléments (le bras rigide et le ressort) étant généralement utilisés pour maintenir la pale contre le fond de la cuve dans les dispositifs pour presser des produits alimentaires de l'état de la technique. L'ergonomie de l'ensemble est donc améliorée puisque aucun élément ne vient gêner l'espace disponible intérieur de la cuve en dehors de la pale et de son arbre d'entraînement.

De façon optionnelle également, le couvercle est formé par moulage d'une matière plastique rigide transparente comportant du polycarbonate ou du styrène acrylonitrile.

Une telle matière plastique permet de voir par transparence à chaque instant le contenu de la cuve.

De façon optionnelle également, le couvercle comporte un trou de passage pour les produits alimentaires permettant leur introduction dans la cuve en position fixée du couvercle sur la cuve.

De façon optionnelle également, la fixation amovible du couvercle à la cuve est à baïonnette prévoyant une rotation comprise entre 10 et 30 degrés pour verrouiller la fixation. Une telle fixation est particulièrement simple et efficace, particulièrement adaptée pour ce type de dispositif.

De façon optionnelle également, un dispositif pour presser des produits alimentaires selon l'invention peut en outre comporter une anse de préhension et des moyens de fixation de cette anse à la cuve par emboîtage élastique de deux extrémités de cette anse de préhension contre la cuve.

Les dispositifs de l'état de la technique sont en général maintenus par des manches, ce qui présente un certain encombrement. L'anse de préhension améliore donc cet encombrement et l'ergonomie générale du dispositif.

De façon optionnelle également, un dispositif pour presser des produits alimentaires selon l'invention peut en outre comporter des pattes de positionnement sur un réceptacle de légumes pressés et des moyens de fixation de ces pattes à la cuve par emboîtage élastique, chaque patte étant munie d'encoches multiples pour un positionnement sur des réceptacles de diamètres multiples.

Cela permet de positionner, avec une bonne stabilité, le dispositif sur une casserole par exemple. Cette stabilité est importante compte tenu de l'actionnement, parfois légèrement déséquilibrant, de ce type de dispositif.

Enfin, De façon optionnelle également, l'anse de préhension présente une encoche dans sa partie inférieure destinée à coopérer avec les encoches des pattes pour le positionnement du dispositif en au moins trois points non alignés sur le réceptacle. Il est alors possible de ne prévoir que deux pattes au minimum pour avoir ces trois points d'appui.

L'invention sera mieux comprise à l'aide de la description qui va suivre, donnée uniquement à titre d'exemple et faite en se référant aux dessins annexés dans lesquels :
- la figure 1 représente schématiquement en perspective et en vue éclatée les différents éléments d'un dispositif pour presser des produits alimentaires selon un mode de réalisation de l'invention,
- la figure 2 représente en perspective le dispositif de la figure 1 en configuration assemblée de ses éléments et disposé sur un réceptacle, et
- la figure 3 est une coupe du dispositif de la figure 1, en configuration assemblée et selon un plan (x, z) défini sur la figure 1.

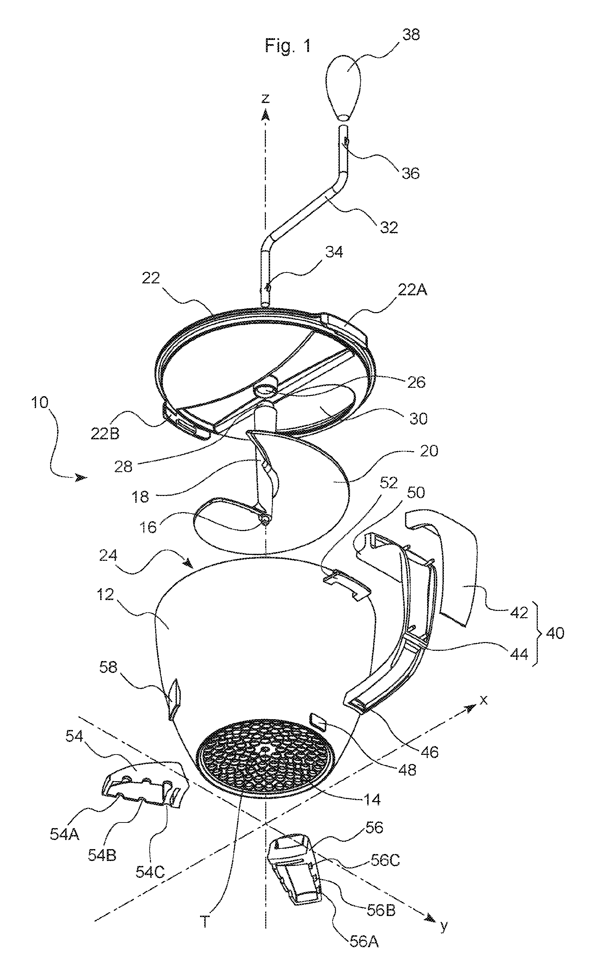

Le dispositif 10 pour presser des produits alimentaires représenté en perspective éclatée sur la figure 1 comporte plusieurs éléments destinés à être assemblés les uns aux autres. Il s'agit, à titre d'exemple non limitatif, d'un moulin à légumes utilisant le principe de l'actionnement d'une pale hélicoïdale destinée à broyer des légumes contre une paroi perforée de manière à produire une purée ou un potage.

Ce moulin à légumes 10 comporte une cuve 12 en forme de bol par exemple moulée dans une matière plastique dure et alimentaire telle que du PolyOxyMéthylène (POM), de l'Acrylonitrile Butadiène Styrène (ABS), du PolyCarbonate (PC), du Styrène AcryloNitrile (SAN) ou du PolyPropylène (PP). Dans un mode de réalisation préféré, on choisit le PP. La cuve 12 est de forme générale cylindrique ou tronconique autour de l'axe z d'un référentiel (x, y, z) illustré sur la figure 1. Elle présente par exemple une hauteur voisine de 13 cm.

Le moulin à légumes 10 comporte également un fond 14 de cuve de forme circulaire et légèrement bombé vers l'intérieur de la cuve 12. Ce fond 14 est perforé d'une multitude de trous tranchants formant ainsi une grille contre laquelle peuvent être broyés des aliments tels que des légumes. Il présente par exemple un diamètre de 10 cm.

Le fond perforé 14 est lui aussi moulé dans une matière plastique dure et alimentaire telle que du POM, de l'ABS, du PC, du SAN ou du PP. Dans l'exemple de la figure 1, il est même moulé avec la cuve 12 dans un même matériau, par exemple du PP.

Le fond perforé 14 comporte en particulier un trou T centré sur l'axe z, par exemple de diamètre différent des autres trous et non tranchant, dans lequel vient se loger une première extrémité 16 en forme de téton d'un arbre 18, disposé le long de l'axe z, porteur d'une pale hélicoïdale 20 dont la forme générale s'enroule autour de l'axe z. L'arbre 18 présente par exemple une longueur totale de 10 cm. Il est par exemple moulé avec la pale dans une matière plastique dure et alimentaire telle que du POM, de l'ABS, du PC, du SAN ou du PP.

C'est du POM qui est choisi dans un mode de réalisation préféré. En effet, le POM présente une rigidité, une résistance à la chaleur (notamment à l'eau bouillante) et une autolubrification qui conviennent particulièrement à la pale hélicoïdale 20. En outre, il s'agit d'une matière plastique qui vérifie toutes les contraintes des normes alimentaires actuelles les plus sévères.

Le moulin à légumes 10 comporte en outre un couvercle circulaire 22 pouvant être fixé de façon amovible sur une extrémité ouverte 24 de la cuve 12 opposée au fond perforé 14. La face intérieure du couvercle 22 comporte en son centre, donc centré sur l'axe z, un logement cylindrique 26 dans lequel vient se loger une seconde extrémité 28 en forme de téton de l'arbre 18 portant la pale 20. En position fixée du couvercle 22 sur la cuve 12, son logement cylindrique 26 fait pression contre l'arbre 18, ainsi bloqué entre le fond perforé 14 et le couvercle 22, de manière à provoquer le broyage des légumes par le fond perforé 14 lorsque la pale 20 tourne dans le bon sens autour de l'axe z.

Comme indiqué précédemment, on peut alors de se passer d'un bras radial rigide positionné en force à l'intérieur de la cuve et d'un ressort maintenant ce bras radial en position, généralement utilisés pour maintenir la pale contre le fond de la cuve dans les dispositifs connus.

Le système de fixation du couvercle 22 sur la cuve 12 est par exemple à baïonnette, prévoyant une rotation comprise entre 10 et 30 degrés autour de l'axe z pour verrouiller la fixation, de préférence même égale à 15 degrés environ. Pour cela, le couvercle 22 présente deux excroissances 22A et 22B comprenant chacune un rail à butée dans lequel vient s'insérer une languette correspondante aménagée en partie supérieure et extérieure de la cuve 22. De préférence, ces excroissances 22A et 22B sont diamétralement opposées sur la périphérie du couvercle 22. Le système de fixation peut ainsi être complètement extérieur à la cuve, optimisant l'espace libre à l'intérieur de celle-ci. Une rotation inférieure à 10 degrés pour la fixation à baïonnette serait susceptible de poser des problèmes de fragilité et de fiabilité. Une rotation supérieure à 30 degrés rendrait le geste moins ergonomique. Le choix de 15 degrés environ représente un bon compromis entre ergonomie, robustesse, esthétique et fabrication.

Le couvercle 22 présente par exemple un diamètre de 15 à 20 cm, légèrement supérieur à celui de l'extrémité ouverte 24 de la cuve. Il comporte en outre un trou oblong 30, excentré par rapport à l'axe z et dont les dimensions sont par exemple comprises entre 5 et 10 cm, plus précisément par exemple entre 5,5 cm (plus petit diamètre) et 8 cm (plus grand diamètre). Ce trou oblong 30 permet d'insérer des légumes, notamment des pommes de terre, dans la cuve 12 alors que le couvercle 22 est fixé sur celle-ci.

Le couvercle 22 est moulé dans une matière plastique transparente, dure et alimentaire telle que du PC ou du SAN. C'est de préférence du SAN qui est choisi parce qu'il est particulièrement rigide et présente une très bonne transparence.

La rotation de la pale 20 autour de l'axe z est actionnée à l'aide d'une manivelle 32 métallique, par exemple en acier inoxydable. A une première extrémité, la manivelle 32 comporte un bras cylindrique 34 centré sur l'axe z et muni de deux ergots de blocage en rotation diamétralement opposés, ce bras 34 s'insérant dans un creux de l'arbre 18 portant la pale 20. Le creux de l'arbre 18 est par exemple de section rectangulaire de sorte que le bras 34 muni de ses deux ergots entraîne l'arbre 18 et la pale 20 dans toute rotation autour de l'axe z. A une seconde extrémité, la manivelle 32 comporte un bras cylindrique 36 déporté par rapport à l'axe z et donc au bras 34 mais parallèle également à ces derniers, muni de deux ergots de blocage en translation diamétralement opposés pour son insertion en force dans le creux d'une poignée 38 destinée à être saisie et entraînée en rotation par un utilisateur. Le creux de la poignée présente localement une zone élargie destinée à recevoir les ergots de blocage en translation. Les bras 34 et 36 sont raccordés entre eux par une portion radiale de la manivelle 32 s'étendant perpendiculairement à l'axe z, ou selon un angle proche de la perpendicularité tel que 80 degrés, et permettant de déporter l'effort en rotation à une certaine distance de cet axe z : concrètement, la manivelle 32 est une tige cylindrique présentant deux coudées. La poignée 38 est moulée dans une matière plastique dure et alimentaire telle que du POM, de l'ABS, du PC, du SAN ou du PP. C'est de préférence du POM qui est choisi.

Le moulin à légumes 10 comporte en outre une anse de préhension 40 comportant un bras principal 42 recourbé à ses deux extrémités et un capot 44 fixé au bras principal 42 à l'aide de pions (par exemple quatre pions) s'étendant depuis ce dernier et entrant en force dans des logements correspondants prévus dans le capot 44. Cette anse 40 présente un plan de symétrie comportant les axes x et z illustrés sur la figure 1. A sa première extrémité inférieure, le bras principal 42 de l'anse 40 présente des moyens 46 coopérant avec des moyens correspondants 48 prévus en partie inférieure de la cuve 12, pour une première fixation par emboîtage élastique de l'anse sur la cuve 12. De même, à sa seconde extrémité supérieure, le bras principal 42 de l'anse 40 présente des moyens 50 coopérant avec des moyens correspondants 52 prévus en partie supérieure de la cuve 12, pour une seconde fixation par emboîtage élastique de l'anse sur la cuve 12.

Les deux éléments précités 42 et 44 de l'anse 40 sont par exemple moulés d'une matière plastique dure (POM, ABS, PC, SAN, PolyEthylène (PE), PP, etc.) et peuvent, pour des raisons esthétiques, être de couleurs différentes. C'est par exemple du POM qui est choisi pour le bras principal 42 et du PE, notamment à haute densité, pour le capot 44. La conception de l'anse 40 en deux pièces rapportées l'une contre l'autre permet d'obtenir un ensemble rigide et solide tout en comportant une quantité minimale de matière plastique. Notamment, chacun des deux éléments 42 et 44 peut comporter des nervures de renforcement qui sont masquées lorsqu'ils sont fixés l'un contre l'autre.

Enfin, le moulin à légumes 10 comporte deux pattes de positionnement sur un réceptacle de légumes pressés. Une première patte 54 est fixée par emboîtage élastique sur la cuve 12 à une distance angulaire de 120 degrés selon l'axe z de l'anse 40. Elle est munie d'encoches multiples 54A, 54B, 54C pour un positionnement sur des réceptacles de diamètres multiples. De même, une seconde patte 56 est fixée par emboîtage élastique sur la cuve 12 à une distance angulaire de 120 degrés selon l'axe z de l'anse 40 et de la première patte 54. Elle est également munie d'encoches multiples 56A, 56B, 56C pour un positionnement sur des réceptacles de diamètres multiples.

Une languette 58 est visible sur la paroi extérieure de la cuve 12 telle qu'illustrée sur la figure 1, coopérant avec des moyens correspondants sur la première patte 54, pour l'emboîtage élastique de cette dernière contre la cuve 12.

Les pattes 54 et 56 sont moulées dans une matière plastique dure et alimentaire telle que du POM, de l'ABS, du PC, du SAN ou du PP. C'est de préférence du POM qui est choisi.

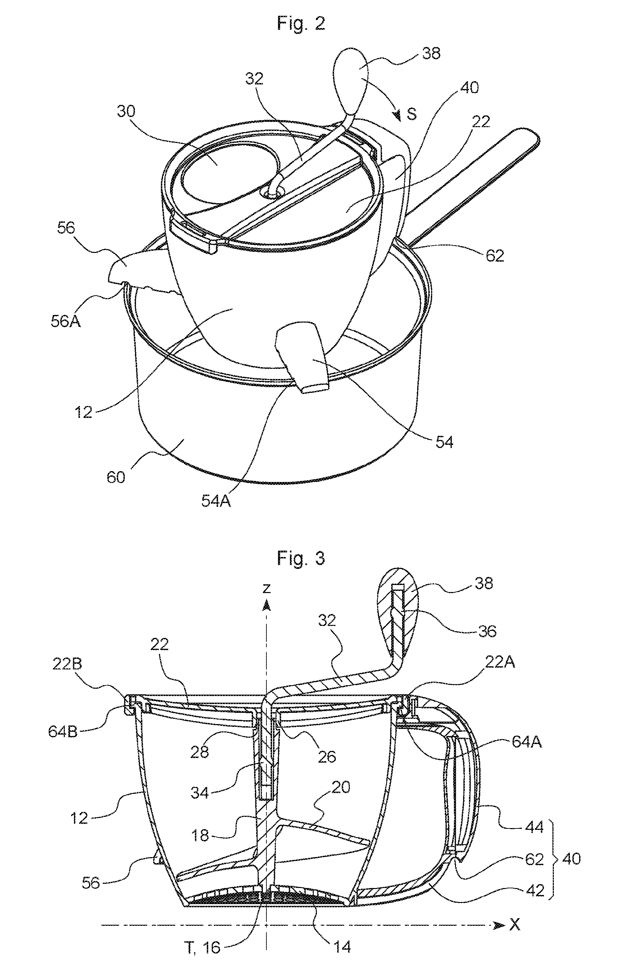

Sur la figure 2, le moulin à légumes 10 est représenté en perspective et en configuration assemblée de ses éléments. Il est positionné sur un réceptacle tel qu'une casserole 60. Dans cette position, on note que les éléments 42 et 44 de l'anse 40 sont conformés de telle sorte que cette dernière présente elle aussi une encoche 62 en partie inférieure, située à une même hauteur que les encoches 54A, 54B, 54C et 56A, 56B, 56C dans le référentiel de l'axe z. De la sorte, cette encoche 62 coopère avec les encoches des pattes 54 et 56 pour le positionnement du moulin à légumes 10 en au moins trois points non alignés sur un rebord de la casserole 60. En l'occurrence, sur la figure 2, la casserole 60 est de diamètre tel que ce sont les encoches 54A et 56A qui coopèrent avec l'encoche 62 pour le positionnement stable du moulin à légumes 10. Les diamètres de casseroles étant normalisés à certaines valeurs telles que 14, 16, 18, 20 ou 22 cm au maximum, la disposition des encoches 54A, 54B, 54C et 56A, 56B, 56C est choisie pour correspondre à trois de ces diamètres, notamment par exemple le diamètre maximal 22 cm pour les encoches 54A et 56A.

Selon une utilisation courante du moulin à légumes 10, celui-ci est positionné comme illustré sur la casserole 60 et son couvercle 22 est fixé à la cuve 12. Des légumes sont introduits dans la cuve 12 par le trou oblong 30. Puis un utilisateur actionne la manivelle 32 à l'aide de la poignée 38 dans le sens S indiqué de sorte que les légumes sont broyés par la lame 20 contre le fond perforé 14. Les légumes broyés sortent alors par le fond perforé 14 de la cuve 12 directement dans la casserole 60.

Sur la figure 3, le moulin à légumes 10 est représenté en coupe selon le plan (x, z) et en configuration assemblée comme sur la figure 2. Selon cette coupe, on voit comment les excroissances 22A et 22B du couvercle 22 coopèrent avec des languettes 64A et 64B diamétralement opposées de la cuve 12. L'une de ces deux languettes, plus précisément celle portant la référence 64A est disposée à proximité des seconds moyens de fixation par emboîtage élastique de l'anse 40. Elle permet ainsi à l'ensemble de présenter une meilleure ergonomie en position fixée du couvercle 22.

Par ailleurs, l'encoche 62 obtenue par la fixation du capot 44 contre le bras principal 42 de l'anse 40 est particulièrement visible dans le plan (x, z). En revanche, les pattes 52 et 54 étant situées hors plan puisque décalées de 120 degrés autour de l'axe z, seule la patte 56 est partiellement visible sur cette coupe.

Enfin, cette coupe montre que le logement cylindrique 26 dans lequel vient se loger la seconde extrémité 28 de l'arbre 18 portant la pale 20 est plus précisément un tube cylindrique traversant s'étendant depuis le centre du couvercle 22 vers l'intérieur de la cuve 12 et par lequel la manivelle 32, en particulier son bras cylindrique 34, entre dans le creux de l'arbre 18 à l'intérieur de la cuve 12.

Il apparaît clairement qu'un dispositif pour presser des produits alimentaires tel que celui décrit précédemment présente un faible de coût de fabrication et une ergonomie améliorée.

On notera par ailleurs que l'invention n'est pas limitée au mode de réalisation décrit précédemment.

Diverses variantes de réalisation peuvent être en effet envisagées dans le cadre de l'invention. Notamment, l'arbre de pale peut être entraîné en rotation par un moteur électrique plutôt que par une manivelle, des moyens de rappel peuvent être prévus entre l'arbre et le couvercle en cas de jeu pour maintenir la pale contre les légumes à broyer, l'anse de préhension peut être moulée d'une seule pièce, voire même moulée avec la cuve, etc.

Plus généralement, il apparaîtra à l'homme de l'art que diverses modifications peuvent être apportées au mode de réalisation décrit ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Dispositif (10) pour presser des produits alimentaires, notamment des légumes, comportant une cuve (12) destinée à recevoir lesdits produits alimentaires, un fond (14) de cuve perforé et une pale (20) de pression des produits alimentaires contre le fond perforé (14), **caractérisé en ce que** le fond perforé (14) est formé par moulage d'une matière plastique rigide.

2. Dispositif (10) pour presser des produits alimentaires selon la revendication 1, dans lequel la cuve (12) est également formée par moulage d'une matière plastique rigide et moulée avec le fond perforé (14).

3. Dispositif (10) pour presser des produits alimentaires selon la revendication 1 ou 2, dans lequel la pale (20) est également formée par moulage d'une matière plastique rigide.

4. Dispositif (10) pour presser des produits alimentaires selon l'une quelconque des revendications 1 à 3, dans lequel la matière plastique rigide comporte au moins l'un des éléments de l'ensemble constitué de polyoxyméthylène, acrylonitrile butadiène styrène, polycarbonate, styrène acrylonitrile et polypropylène.

5. Dispositif (10) pour presser des produits alimentaires selon l'une quelconque des revendications 1 à 4, comportant un arbre (18) d'entraînement de la pale (20) en rotation et un couvercle (22) à fixation amovible (22A, 22B) sur la cuve (12) couvrant une ouverture principale (24) de la cuve (12) opposée au fond perforé (14), le fond perforé (14) comportant en son centre un trou destiné à recevoir une première extrémité (28) de l'arbre (18) et la face interne du couvercle (22) comportant en son centre un logement (26) destiné à recevoir une seconde extrémité (28) de l'arbre (18).

6. Dispositif (10) pour presser des produits alimentaires selon la revendication 5, dans lequel le couvercle (22) est formé par moulage d'une matière plastique rigide transparente comportant du polycarbonate ou du styrène acrylonitrile.

7. Dispositif (10) pour presser des produits alimentaires selon la revendication 5 ou 6, dans lequel le couvercle (22) comporte un trou (30) de passage pour les produits alimentaires permettant leur introduction dans la cuve (12) en position fixée du couvercle (22) sur la cuve (12).

8. Dispositif (10) pour presser des produits alimentaires selon l'une quelconque des revendications 5 à 7, dans lequel la fixation amovible (22A, 22B) du couvercle (22) à la cuve (12) est à baïonnette prévoyant une rotation comprise entre 10 et 30 degrés pour verrouiller la fixation.

9. Dispositif (10) pour presser des produits alimentaires selon l'une quelconque des revendications 1 à 8, comportant une anse de préhension (40) et des moyens (46, 48, 50, 52) de fixation de cette anse (40) à la cuve (12) par emboîtage élastique de deux extrémités de cette anse de préhension (40) contre la cuve (12).

10. Dispositif (10) pour presser des produits alimentaires selon l'une quelconque des revendications 1 à 9, comportant des pattes (54, 56) de positionnement sur un réceptacle (60) de légumes pressés et des moyens (58) de fixation de ces pattes (54, 56) à la cuve (12) par emboîtage élastique, chaque patte (54, 56) étant munie d'encoches multiples (54A, 54B, 54C, 56A, 56B, 56C) pour un positionnement sur des réceptacles de diamètres multiples.

11. Dispositif (10) pour presser des produits alimentaires selon les revendications 9 et 10, dans lequel l'anse de préhension (40) présente une encoche (62) dans sa partie inférieure destinée à coopérer avec les encoches (54A, 54B, 54C, 56A, 56B, 56C) des pattes (54, 56) pour le positionnement du dispositif (10) en au moins trois points non alignés sur le réceptacle (60).
